# EUROPÄISCHE PATENTSCHRIFT

(11) **EP 0 827 907 B1**
(45) Veröffentlichungstag und Bekanntmachung des Hinweises auf die Patenterteilung: **16.04.2003**
(21) Anmeldenummer: 96114162.9
(22) Anmeldetag: 04.09.1996
(51) Int. Cl.: B64D 11/00, B64D 13/00, A62B 7/14

(54) **Verfahren und Vorrichtung zur Bereitstellung von Atemgas in Notsauerstoffsystemen**
Method and device for providing breathing air to emergency oxygen systems
Procédé et dispositif pour fournir de l'air respirable aux systèmes d'oxygène de secours

(43) Veröffentlichungstag der Anmeldung: 11.03.1998
(73) Patentinhaber: Airbus Deutschland GmbH, 21129 Hamburg (DE)
(72) Erfinder: Lang, Stephan, Dipl.-Ing., 21629 Neu Wulmstorf (DE)
(74) Vertreter: Hansmann, Dierk, Dipl.-Ing.

(56) Entgegenhaltungen:
- EP-A- 0 364 283
- GB-A- 2 240 722
- US-A- 3 593 735
- US-A- 3 664 359
- US-A- 5 069 692

## Beschreibung

Die Erfindung betrifft eine Vorrichtung zur Bereitstellung von Atemgas in Notsauerstoffsystemen für Flugzeuge, insbesondere mit einer Druckkabine ausgestattete Passagierflugzeuge, gemäß dem Oberbegriff des Anspruchs 1.

Notsauerstoffsysteme dienen in der Luftfahrttechnik dem Zweck, in Flugzeugen, die mit einer Druckkabine ausgestattet sind, im Fall eines plötzlich auftretenden Druckverlustes die versorgung von Besatzung und Passagieren mit Atemluft über Atemmasken sicherzustellen. Dies geschieht bisher vorwiegend entweder über eine dezentrale Sauerstofferzeugung und Versorgung mittels Feststoffgeneratoren an den Entnahmestellen, oder über eine zentrale Sauerstoffbevorratung in Hochdruckzylindern, wobei die Verteilung zu den einzelnen Verbrauchern über ein Niederdruck-Rohrleitungssystem erfolgt und der Sauerstoffdurchsatz sowohl zentral als auch dezentral geregelt werden kann.

In beiden Fällen wird den Entnahmestellen, d.h. den Atemmasken ein nahezu reines Sauerstoffgas mit einem Sauerstoffgehalt von etwa 99,5 % zugeführt, wobei die Bemessung der zugeführten Sauerstoffmenge in Form einer vom Kabinendruck abhängigen Massendurchsatzregelung vorgenommen wird. In den einzelnen Atemmasken erfolgt dann eine Vermischung mit der Umgebungsluft in der Weise, daß für ein für den Konsumenten nach luftfahrtmedizinischen Erkenntnissen ausreichender Sauerstoffpartialdruck eingehalten wird.

Die Nachteile dieser bekannten Vorrichtungen liegen zum einen in einem vergleichsweise hohen Gefährdungspotential gegenüber Feuer und Explosionen, das durch die Verwendung praktisch reinen Sauerstoffes gegeben ist, und zum anderen in der Erfordernis eines vergleichsweise aufwendigen Regelungssystems für den Sauerstoffdurchsatz, der nach dem herrschenden Kabinendruck, d.h. der jeweiligen Flughöhe, zu regeln ist.

Deshalb ist in der US-A-3 664 359 bereits eine Vorrichtung der eingangs genannten Art vorgeschlagen worden, bei der über ein bordeigenes Verteilungsnetz sowie über daran angeschlossene Atemmasken ein mit Sauerstoff angereichertes Atemgas eingespeist wird und bei der das Gefährdungspotential gegenüber Feuer und Explosionen, wie es bei einer Verwendung von praktisch reinem Sauerstoff für derartige Zwecke gegeben ist, somit auf ein Minimum reduziert wird. Eine vergleichbare Vorrichtung ist weiterhin auch aus der EP-A-0 364 283 bekannt geworden.

Aufgabe der Erfindung ist es, eine Vorrichtung der eingangs genannten Art so auszubilden, bestehend aus einer Verbindung mit einer oder mehreren Gaserzeugungseinheiten, die ein solches Atemgasgemisch unmittelbar im Flugzeug produzieren, daß sie zugleich zuverlässig und einfach aufgebaut ist.

Die Erfindung löst diese Aufgabe dadurch, daß bei einer derartigen Vorrichtung die Gaserzeugungseinheit über wenigstens je einen Niederdruckauslaß für das mit Sauerstoff angereicherte Gasgemisch und einen Hochdruckauslaß für Sauerstoff verfügt und daß beide Auslässe derart mit der wenigstens einen Mischeinheit miteinander verbunden sind, daß der Sauerstoffpartialdruck des Atemgases in Abhängigkeit vom Kabinendruck regelbar und das Atemgas den Atemmasken in einem konstanten Massenstrom zuführbar ist.

Die Erfindung ermöglicht es , den Aufbau einer derartigen Vorrichtung wesentlich zu vereinfachen und dadurch zugleich eine verbesserte Zuverlässigkeit eines solchen Systems sowie eine Reduzierung der erforderlichen Wartungsarbeiten zu erreichen. Ein weiterer Vorteil resultiert aus der Tatsache, daß bei der Vorrichtung nach der Erfindung anstelle einer aufwendigen kabinendruckabhängigen Sauerstoffdurchsatzregelung eine wesentlich einfacher aufgebaute Massenstrombegrenzung vorgesehen ist.

Eine Vorrichtung, bei der über eine Mischeinheit Druckluft von einen im Flugzeug angeordneten Verdichter abhängig vom anliegenden Luftdruck mit Drucksauerstoff in einem solchen Verhältnis gemischt wird, daß der erforderliche Sauerstoffpartialdruck eingehalten wird, ist im Prinzip auch bereits aus der DE-AS 1 170 792 bekannt geworden, jedoch dient diese bekannte Vorrichtung ausschließlich dem Zweck, Atemgas für Druckkabinen und Höhenatemgeräte bereitzustellen. Für einen Einsatz in Notsauerstoffversorgungseinrichtungen von Passagierflugzeugen ist dieses bekannte System bisher nicht vorgesehen.

In vorteilhafter Ausgestaltung der Erfindung erfolgt die Erzeugung des mit Sauerstoff angereicherten Atemgases unmittelbar im Flugzeug entweder mittels Trennverfahren auf der Basis von Molekularsieben bzw. selektiv arbeitenden Membranen aus der Umgebungs- oder aus Zapfluft vom Triebwerk oder aber mittels Elektrolyse aus mitgeführtem Frischwasser. Dies führt zu einer erheblichen Verringerung des Sicherheitsrisikos, da durch diese Maßnahme die Bevorratung von Sauerstoff in Hochdruckzylindern entfallen kann. Ferner verringert sich dadurch der Wartungsaufwand weiter, während zugleich die zur Verfügung stehenden Versorgungszeiten wesentlich verlängert werden.

Um auch während der Anlaufphase einer solchen Gaserzeugungseinrichtung nach einem plötzlichen Druckabfall in der Kabine eine ausreichende Sauerstoffversorgung zu gewährleisten und den in der ersten Phase eines Flugzeug-Notabstieges auftretenden Spitzenbedarf an Sauerstoff abzudecken, ist es im Zusammenhang mit der erfindungsgemäßen Vorrichtung vorteilhaft, einen gewissen Vorrat an Gas mit hoher Sauerstoffkonzentration vorzusehen. Die Befüllung der entsprechenden Vorratsbehälter kann auf einfache Weise über die Gaserzeugungseinrichtung erfolgen, da diese erfindungsgemäß neben dem Niederdruckauslaß für das mit Sauerstoff angereicherte Gasgemisch mit einem Hochdruckauslaß für Gas hoher Sauerstoffkonzentration ausgestattet ist, wobei diese beiden Auslässe mit der Mischeinheit miteinander verbunden sind.

Im Zusammenhang mit dem Einsatz von Sauerstoffgewinnungseinheiten ist es möglich, auch nach einer aufgetretenen Dekompression der Druckkabine längere Zeit in einer größeren Flughöhe zu verbleiben und dadurch einen wesentlich niedrigeren Brennstoffverbrauch bzw. eine entsprechend größere Reichweite zu erzielen. Schließlich kann bei dem Verfahren nach der Erfindung in den Fällen, in denen das Atemgas über Trennverfahren aus der Umgebungs- oder Triebwerkszapfluft erzeugt wird, der als Nebenprodukt anfallende Stickstoff zusätzlich genutzt werden. Dieser kann entweder dazu dienen, die entleerten Bereiche der Treibstofftanks zu fluten und damit das Explosionsrisiko herabzusetzen, oder aber durch Nutzung des herrschenden Druckgefälles zwischen dem Gaserzeugungssystem und der Umgebung eine Turbine zu beaufschlagen und auf diese Weise einen Teil der bei der Gaserzeugung aufgewandten Energie zurückzugewinnen.

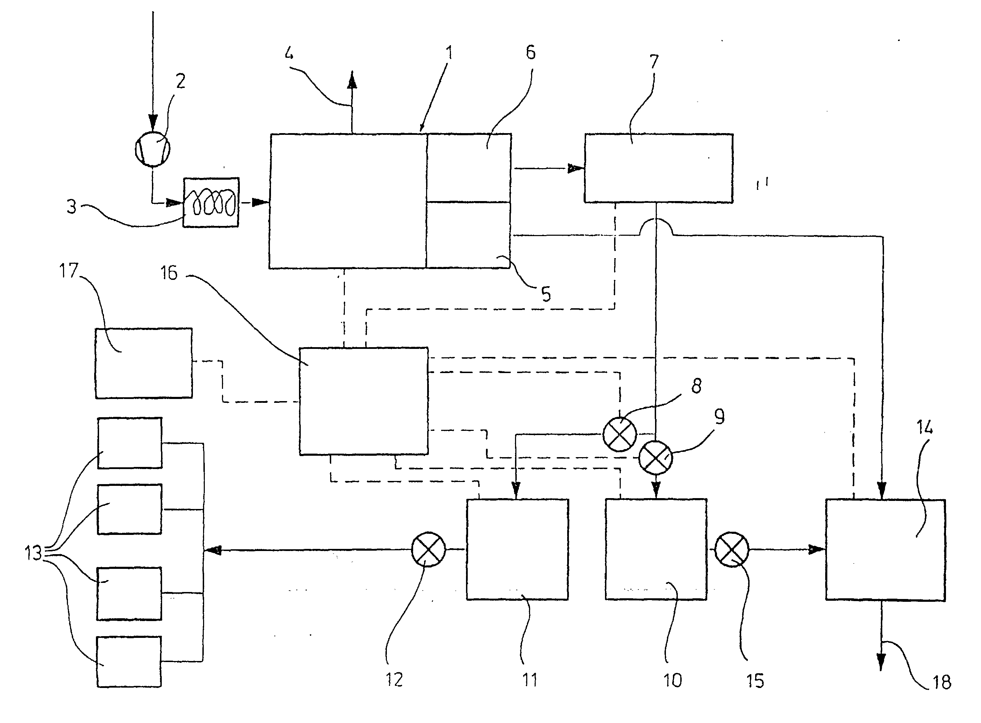

Nachfolgend soll die Erfindung anhand eines in der Zeichnung dargestellten Ausführungsbeispiels näher erläutert werden. Die Figur zeigt in schematischer Weise den prinzipiellen Aufbau eines Systems für die Versorgung von Besatzung und Passagieren eines mit einer Druckkabine ausgestatteten Verkehrsflugzeuges mit Atemgas im Falle eines auftretenden Druckabfalles in der Kabine.

Die Anordnung besteht aus einer Gaserzeugereinheit 1, die über einen Gaseinlaß von einem Kompressor 2 sowie einem Kühler 3 mit Umgebungsluft versorgt wird. Die Umgebungsluft kann statt über den Kompressor 2 auch über einen entsprechend ausgebildeten Lufteinlauf, auch als "Ram Air" bezeichnet, verdichtet werden. Anstelle von Umgebungsluft kann aber auch auf Triebwerkszapfluft zurückgegriffen werden, die direkt über den Kühler 3, ohne Kompressor, in die Gaserzeugungseinheit 1 geleitet wird.

Die Gaserzeugungseinheit 1 verfügt über die erforderlichen technischen Einrichtungen, um aus der zugeführten Luft üblicher Zusammensetzung ein Gasgemisch mit erhöhter Sauerstoffkonzentration zu gewinnen. Dies geschieht entweder nach dem Wirkungsprinzip eines Molekularsiebes oder aber unter Verwendung selektiv permeabler Membranmodule, die ein bevorzugtes Trennvermögen für Sauerstoff besitzen. Dieses kann mit Hilfe von sogenannten elektrochemischen Membranen durchgeführt werden, wobei Sauerstoffionen mit Hilfe eines elektrischen Feldes über eine Keramikmembran transportiert werden und auf der anderen Seite wieder entionisiert werden. Ferner ist alternativ auch der Einsatz nach dem Elektrolyseverfahren durchführbar.

Die Gaserzeugungseinheit 1 besitzt neben einem Auslaß 4 für Abgase je einen Niederdruckauslaß 5 für das mit Sauerstoff angereicherte Atemgas und einen Höchdruckauslaß 6 für mit der gleichen Einheit erzeugtes Gas, das praktisch vollständig aus Sauerstoff besteht und das höher verdichtet ist.

Der Hochdruckauslaß 6 ist über einen Sauerstoffmonitor 7 sowie zwei Absperrventile 8 und 9 mit zwei Vorratsbehältern 10 und 11 verbunden, von denen der erstere für die Versorgung der Passagiere und der letztere für die Versorgung der Cockpit-Besatzung vorgesehen ist. Die Versorgung der Cockpit-Besatzung erfolgt bei dem hier dargestellten Ausführungsbeispiel ausschließlich mit dem in Behälter 11 gespeicherten reinen Sauerstoff, der den Besatzungsmitgliedern über ein Druckreduzierventil 12 sowie Atemmasken 13 zugeführt wird, in denen dieser Sauerstoff auf herkömmliche Weise mit Umgebungsluft vermischt wird oder als reiner Sauerstoff zur Verfügung steht.

Für die Versorgung der Passagiere mit Atemgas ist eine Mischeinheit 14 vorgesehen, die einerseits mit dem Niederdruckauslaß 5 und andererseits, über ein zweites Druckreduzierventil 15, mit dem Vorratsbehälter 10 verbunden ist, der den Sauerstoffvorrat für die Passagiere enthält. Die Mischeinheit 14 ist, ebenso wie die beiden Absperrventile 8 und 9 sowie die Vorratsbehälter 10 und 11 mit einer Kontrolleinheit 16 verbunden, die zugleich die Parameter Druck und Temperatur registriert und die ihrerseits an einen zentralen Bordrechner 17 angeschlossen ist.

Nicht dargestellt in der Figur sind die Einzelheiten eines Flugzeugverteilungsnetzwerkes 18, das über kalibrierte Massenstrombegrenzer sowie Atemmasken für die Passagiere verfügt.

Bereits vor dem Eintritt eines möglichen Druckabfalls, beispielsweise zu Beginn eines Fluges, werden über den Hochdruckauslaß 6 der Gaserzeugungseinheit 1 die beiden Vorratsbehälter 10 und 11 mit hoch verdichtetem, praktisch reinem Sauerstoff befüllt. Die beiden Absperrventile 8 und 9 regeln dabei, von der Kontrolleinheit 16 beaufschlagt, ein sequentielles Befüllen dieser Behälter in der Weise, daß zuerst der Behälter 11 für die Besatzung und erst danach der Behälter 10 für die Passagiere gefüllt wird. Anschließend verbleibt die Gaserzeugungseinheit 1 im Stand-By-Modus.

Bei einem plötzlich eintretenden Abfall des Kabinendruckes wird die Gaserzeugungseinheit 1 sofort gestartet und versorgt über den Niederdruckauslaß 5 die Mischeinheit 14 mit Atemgas erhöhter Sauerstoff-konzentration. Der Sauerstoffpartialdruck in diesem Atemgas wird dabei über die Kontrolleinheit 16, die die Zufuhr von reinem Sauerstoff aus dem Vorratsbehälter 10 zu diesem Atemgas regelt, auf einen Wert eingestellt, der eine ausreichende Versorgung der Passagiere mit Sauerstoff sicherstellt. Die Höhe des eingestellten Sauerstoffpartialdruckes richtet sich dabei nach der Flughöhe bzw. dem daraus sich ergebenden Kabinendruck. Das Atemgas wird mit konstantem Massenstrom über-das Verteilungsnetzwerk 18 zu den Atemmasken für die Passagiere geleitet, in denen keine Zumischung von Umgebungsluft zu diesem Atemgas erfolgt. Die Atemmasken 13 der Cockpit-Besatzung werden über das Druckreduzierventil 12 aus dem Vorratsbehälter 11 mit Sauerstoff versorgt. Der Vorratsbehälter 10 für die Passagierversorgung stellt dabei in erster Linie einen Puffer dar, der dazu dient, in der Anlaufphase der Gaserzeugungseinheit 1, wenn noch nicht genügend hoch konzentriertes Atemgas am Niederdruckauslaß 5 zur Verfügung steht, die Atemgasversorgung der Passagiere sicherzustellen und auch den Spitzenbedarf an Sauerstoff während der ersten Phase des Notabstieges des Flugzeuges zu decken. Er kann deshalb vergleichsweise klein dimensioniert sein.

Abweichend von der vorangehend beschriebenen Anordnung kann die Erzeugung des Atemgases sowie des hoch vorgespannten Sauerstoffes auf elektrolytischem Wege erfolgen, wobei im Flugzeug mitgeführtes Frischwasser als Ausgangsprodukt dient.

## Patentansprüche

1. Vorrichtung zur Bereitstellung von Atemgas in Notsauerstoffsystemen für Flugzeuge, insbesondere mit einer Druckkabine ausgestattete Passagierflugzeuge, bestehend aus wenigstens einer vom Kabinendruck beaufschlagbaren Gaserzeugungseinheit (1) sowie einem bordeigenen Verteilungsnetz mit nachgeschalteten Atemmasken, über die ein mit Sauerstoff angereichertes Atemgas eingespeist wird, mit wenigstens je einem Auslaß für Sauerstoff oder ein mit Sauerstoff angereichertes Gasgemisch, und mit wenigstens einer Mischeinheit (14), die von einer Kontrolleinheit (16) zur Regelung der Sauerstoffzufuhr zum Gasgemisch beaufschlagbar ist, wobei die Kontrolleinheit (16) mit einem Sensor zur Erfassung des Kabinendrucks ausgestattet ist, **dadurch gekennzeichnet, daß** die Gaserzeugungseinheit (1) über wenigstens je einen Niederdruckauslaß (5) für ein mit Sauerstoff angereichertes Gasgemisch und einen Hochdruckauslaß (6) für Sauerstoff verfügt und daß beide Auslässe (5, 6) derart mit der wenigstens einen Mischeinheit (14) miteinander verbunden sind, daß der Sauerstoffpartialdruck des Atemgases in Abhängigkeit vom Kabinendruck regelbar und das Atemgas den Atemmasken in einem konstanten Massenstrom zuführbar ist.

2. Vorrichtung nach Anspruch 1, **dadurch gekennzeichnet, daß** der Hochdruckauslaß (6) der Gaserzeugungseinheit (1) mit wenigstens einem Vorratsbehälter (10, 11) zur Aufnahme von Sauerstoffgas verbunden ist, das dem Gasgemisch zusetzbar ist.

3. Vorrichtung nach Anspruch 1 oder 2, **dadurch gekennzeichnet, daß** die Gaserzeugung aus der Umgebungsluft erfolgt.

4. Vorrichtung nach Anspruch 1 oder 2, **dadurch gekennzeichnet, daß** die Gaserzeugung aus Triebwerkszapfluft erfolgt.

5. Vorrichtung nach Anspruch 3 oder 4, **dadurch gekennzeichnet, daß** für die Gaserzeugung. ein Molekularsieb vorgesehen ist.

6. Vorrichtung nach Anspruch 3 oder 4, **dadurch gekennzeichnet, daß** für die Gaserzeugung selektive permeable Membranen vorgesehen sind.

7. Vorrichtung nach Anspruch 1 oder 2, **dadurch gekennzeichnet, daß** die Gaserzeugung durch die Elektrolyse von Wasser erfolgt.

## Claims

1. Device for the provision of breathing gas in emergency oxygen systems for aircraft, in particular passenger aircraft equipped with a pressurised cabin, consisting of at least one gas generation unit (1) that can be charged by the cabin pressure as well as an on-board distribution network with connected breathing masks, via which an oxygen-enriched breathing gas can be supplied, with at least one outlet for oxygen or an oxygen-enriched gas mixture, and with at least one mixing unit (14) that can be charged by a control unit (16) for regulating the oxygen feed to the gas mixture, the control unit (16) being equipped with a sensor for determining the cabin pressure,
**characterised in that** the gas generation unit (1) has available at least one low pressure outlet (5) for an oxygen-enriched gas mixture and at least one high pressure outlet (6) for oxygen, and that both outlets (5, 6) are connected to one another in such a way with the at least one mixer unit (14) that the oxygen partial pressure of the breathing gas can be regulated depending on the cabin pressure and the breathing gas can be supplied to the breathing masks in a constant mass flow.

2. Device according to claim 1, **characterised in that** the high pressure outlet (6) of the gas generation unit (1) is connected to at least one storage container (10, 11) for receiving oxygen gas that can be fed to the gas mixture.

3. Device according to claim 1 or 2, **characterised in that** the gas is generated from the ambient atmosphere.

4. Device according to claim 1 or 2, **characterised in that** the gas is generated from the air fed to the propulsion unit.

5. Device according to claim 3 or 4, **characterised in that** a molecular sieve is provided for the gas generation.

6. Device according to claim 3 or 4, **characterised in that** selectively permeable membranes are provided for the gas generation.

7. Device according to claim 1 or 2, **characterised in that** the gas is generated by the electrolysis of water.

## Revendications

1. Dispositif pour fournir de l'air respirable aux systèmes d'oxygène de secours d'aéronefs, et plus particulièrement d'aéronefs de passagers équipées d'une cabine de pression, constitué d'au moins une unité de production de gaz (1) pouvant être alimentée à partir de la pression de cabine et d'un réseau de distribution de bord avec inhalateurs d'oxygène raccordés en aval et par l'intermédiaire desquels un gaz respirable enrichi en oxygène est injecté, avec au moins une sortie pour oxygène ou pour un mélange gazeux enrichi en oxygène, et avec au moins une unité de mélange (14) pouvant être alimentée à partir d'une unité de commande (16) destinée à régler l'alimentation en oxygène du mélange gazeux, l'unité de commande étant équipée d'un senseur destiné à capter la pression de cabine, et **caractérisé en ce que**
l'unité de production de gaz (1) dispose d'au moins une sortie basse pression (5) pour mélange gazeux enrichi en oxygène et d'au moins une sortie haute pression (6) pour oxygène, les deux sorties (5, 6) sont reliées avec au moins l'unité de mélange (14) de telle sorte que la pression partielle en oxygène du gaz respirable peut être réglé en fonction de la pression de cabine et le gaz respirable peut être acheminé vers les inhalateurs d'oxygène dans un débit masse constant.

2. Dispositif selon la revendication 1, **caractérisé en ce que** la sortie haute pression (6) de l'unité de production de gaz (1) est reliée à au moins un récipient de stockage (10, 11) destiné à recevoir l'oxygène pouvant être ajoutée au mélange gazeux.

3. Dispositif selon la revendication 1 ou 2, **caractérisé en ce que** le gaz est produit à partir de l'air ambiant.

4. Dispositif selon la revendication 1 ou 2, **caractérisé en ce que** le gaz est produit à partir de l'air du distributeur du réacteur.

5. Dispositif selon la revendication 3 ou 4, **caractérisé en ce que** un tamis moléculaire a été prévu pour produire le gaz.

6. Dispositif selon la revendication 3 ou 4, **caractérisé en ce que** des membranes perméables sélectives ont été prévues pour produire le gaz.

7. Dispositif selon la revendication 1 ou 2, **caractérisé en ce que** le gaz est produit par électrolyse d'eau.
